# NOUVEAU FASCICULE DE BREVET EUROPEEN

(11) **EP 2 895 437 B2**
(45) Date de publication et mention de la décision concernant l'opposition: **02.08.2023**
(45) Mention de la délivrance du brevet: 13.06.2018
(21) Numéro de dépôt: 13759780.3
(22) Date de dépôt: 12.09.2013
(51) Int. Cl.: C04B 22/06, C01F 11/02, C04B 2/04, C09C 1/02

(54) **COMPOSITION DE LAIT DE CHAUX DE GRANDE FINESSE**
KALKWASSER VON HOHER FEINHEIT
HIGH-FINESSE LIMEWATER COMPOSITION

(30) Priorité: 12.09.2012 BE 201200602; 29.10.2012 US 201261719622 P
(43) Date de publication de la demande: 22.07.2015
(73) Titulaire: S.A. Lhoist Recherche et Développement, 1342 Ottignies-Louvain-la-Neuve (BE)
(72) Inventeur: GÄRTNER, Robert Sebastian, 1501 Buizingen (BE); DIAZ CHAVEZ, Luis Alfredo, 1320 Beauvechain (BE)
(74) Mandataire: Gevers Patents
(86) Numéro de dépôt international: PCT/EP2013/068906
(87) Numéro de publication internationale: WO 2014/041068

(56) Documents cités:
- EP-A1- 0 943 590
- WO-A2-2005/014483
- WO-A2-2005/014483
- US-A1- 2004 258 612
- E. RUIZ-AGUDO ET AL: "Microstructure and Rheology of Lime Putty", LANGMUIR, vol. 26, no. 6, 16 mars 2010 (2010-03-16), pages 3868-3877, XP055065261, ISSN: 0743-7463, DOI: 10.1021/la903430z cité dans la demande

## Description

La présente invention se rapporte à un procédé de production d'une composition de lait de chaux comprenant des particules de chaux éteinte en suspension dans une phase aqueuse.

Des suspensions de particules de chaux éteinte parfois également appelée lait de chaux, crème de chaux ou suspension de chaux sont largement utilisées au niveau industriel comme réactifs, dans une multitude d'applications, notamment la neutralisation d'eaux usées ou d'effluents acides, l'ajustement du pH et la minéralisation d'eau potable, la neutralisation de réactions chimiques, comme par exemple lors de la production d'oxyde d'éthylène ou de propylène, comme source de calcium ou pour la précipitation dans la production de la vitamine C, de l'acide citrique et des carbonates de calcium précipités (PCC), ou encore comme adsorbant dans la désulfurisation ou l'élimination des gaz acides, tel HCl, dans les gaz de fumées.

De telles suspensions de particules de chaux éteinte ou laits de chaux sont communément obtenus par extinction de chaux vive avec un large excès d'eau ou par mise en suspension de chaux éteinte pulvérulente. Les particules obtenues sont composées de manière prédominante d'hydroxyde de calcium.

Cette chaux éteinte ou hydroxyde de calcium peut évidemment contenir des impuretés, à savoir des phases dérivées de SiO₂, Al₂O₃, Fe₂O₃, MnO, P₂O₅, K₂O et/ou SO₃, représentant globalement quelques dizaines de grammes par kilogramme. Néanmoins, la somme de ces impuretés, exprimées sous la forme des oxydes précités, ne dépasse pas 5 % en masse, de préférence 3 %, de préférence 2 % ou même 1 % de la masse de la charge minérale selon l'invention. En particulier, la chaux éteinte contient avantageusement moins de 1,0 % en masse de Fe₂O₃, de préférence moins de 0,5 % et de préférence moins de 0,3.

Cette chaux éteinte peut aussi contenir de l'oxyde de calcium qui n'aurait pas été hydraté au cours de l'extinction, tout comme elle peut contenir du carbonate de calcium CaCO₃. Ce carbonate de calcium peut provenir soit du calcaire initial dont est dérivée la chaux éteinte selon l'invention (incuits), soit d'une réaction de carbonatation partielle de la chaux éteinte au contact de l'air. La teneur en oxyde de calcium dans la chaux éteinte dans le cadre de la présente l'invention est généralement inférieure à 3 % en masse, de préférence inférieure à 2 % et de manière avantageuse inférieure à 1 %. Celle en carbonate de calcium est inférieure à 10 % en masse, de préférence inférieure à 6 % et de manière avantageuse inférieure à 4 %, de manière encore plus avantageuse inférieure à 3%.

Cette chaux éteinte peut aussi contenir de l'oxyde de magnésium MgO ou des phases dérivées du type Mg(OH)₂ ou MgCO₃, représentant globalement quelques dizaines de grammes par kilogramme. Néanmoins, la somme de ces impuretés, exprimées sous la forme de MgO, ne dépasse avantageusement pas 5 % en masse, de préférence 3 %, de préférence 2 % ou même 1 % du poids de la charge minérale selon l'invention

Des facteurs limitant l'utilisation de laits de chaux par rapport à d'autres réactifs potentiels résident généralement dans sa viscosité et sa vitesse de réaction ou de neutralisation dans le milieu réactionnel de l'application..

Bien entendu, une vitesse de réaction élevée est recherchée dès lors qu'elle permet la mise en place de procédés plus rapides et donc des temps de séjours plus courts, et permettrait au niveau industriel l'utilisation d'équipement de réaction plus petits et probablement moins couteux et/ou un équipement industriel à capacité de production supérieure. De plus, dans certains procédés, une vitesse de réaction minimale prédéterminée est souvent requise pour fournir un produit ayant des caractéristiques qualitatives souhaitées.

Malheureusement, la viscosité est généralement limitative pour permettre une utilisation efficace des laits de chaux fins. En effet, la suspension doit être pompée pour être alimentée d'un point à l'autre et dosée, ce qui n'est pas simple pour des suspensions hautement visqueuses. De plus, des suspensions fortement visqueuses réduisent généralement les qualités de la dispersion, ce qui a une incidence sur les vitesses de réaction observées pour de telles applications puisqu'il faut plus de temps et d'énergie pour disperser les particules de chaux éteinte dans le milieu réactionnel.

La viscosité et la vitesse de réaction d'un lait de chaux sont deux grandeurs liées à la taille des particules. Des particules à taille de particules réduite présentent généralement des vitesses de réaction supérieures, mais également engendrent une viscosité élevée de la suspension dans laquelle elles se trouvent, particulièrement lorsque la teneur en matière solide doit être augmentée.

La vitesse de réaction des particules de chaux éteinte est communément liée à la vitesse de dissolution des particules de chaux éteinte ou d'hydroxyde de calcium, laquelle augmente lorsque la surface externe des particules augmente et qu'ainsi la taille des particules diminue. Dans la même logique, la viscosité augmente avec une teneur en matière solide qui augmente et avec une taille de particules qui diminue. Ceci est généralement expliqué par le fait que la teneur en particules par unité de volume augmente. Dès lors de plus en plus de particules sont à proximité les unes des autres, et interagissent ainsi entre elles et avec l'eau. De telles interactions sont considérées par certains auteurs comme étant principalement de nature attractive étant donné la faible charge de surface des particules de chaux éteinte et leur capacité à former des liaisons hydrogène avec les molécules d'eau. Ces interactions entraînent alors une augmentation de la cohésion au sein de la suspension et donc un accroissement de la viscosité.

Dans le cadre de la présente invention, il faut distinguer la *réactivité du lait de chaux* qui représente la vitesse de dissolution des particules de chaux hydratée de la *réactivité de la chaux vive,* c'est-à-dire la vitesse de réaction de la chaux vive avec l'eau pour produire de la chaux éteinte et donc par exemple un lait de chaux.

En effet, la réactivité de la chaux vive est généralement caractérisée et mesurée par la procédure divulguée dans la norme européenne EN459-2 et souvent quantifiée par le t₆₀, temps nécessaire pour atteindre 60°C pour un volume d'eau de 600 cm³ initialement à 20°C, à partir de l'ajout de 150 g de chaux vive.

La réactivité des laits de chaux est quant à elle caractérisée au sens de la présente invention selon travaux de van Eekeren et coll. divulgués dans le document "'Improved milk-of-lime for softening of drinking water', M.W.M. van Eekeren, J.A.M. van Paassen, C.W.A.M. Merks, KIWA NV Research and Consultancy, Nieuwegein, Septembre 1993" produit et distribué par le KIWA, Institut Royal Néerlandais de l'analyse de l'eau (KIWA NV Research and Consultancy, Groningenhaven 7, P.O. Box 1072, 3430BB Nieuwegein).

Au sens de la présente invention, la procédure décrite a été affinée de manière à améliorer la précision et la reproductibilité des résultats et a été testée sur une multitude de formulations de laits de chaux différentes.

Selon la présente invention, la vitesse de dissolution de la chaux éteinte dans de l'eau désionisée est mesurée sous la forme d'une augmentation de la conductivité électrique de la solution, dans des conditions auxquelles la solution reste sous le seuil de saturation par rapport à l'hydroxyde de calcium. Pour assurer de rester sous le seuil de saturation, on ajoute 0,1 g de chaux hydratée à 700 g d'eau à 25°C, ce qui permet de rester largement sous le seuil de solubilité de l'hydroxyde de calcium qui est d'environ 1,5 g par litre de solution à 25°C (voir par exemple le document « Solubitities of Inorganic & Metalorganic Compounds - Volume 2 », A. Seidell, W.F. Linke, 1953, van Nostrand (publ.), p. 631).

Pour atteindre cette mesure précise et reproductible, on prépare 500 g de suspension contenant 2% en poids de chaux éteinte à caractériser, à savoir 10 g de chaux éteinte dans 490 g d'eau. Cette suspension et 700 g d'eau désionisée sont thermostatisés à 25°C précisément. Une cellule de conductivité à temps de réponse de 0,05 sec ou moins est utilisé pour enregistrer automatiquement, au moyen d'un enregistreur de données, la conductivité de l'échantillon de 700 g d'eau désionisée qui est agité vigoureusement tout au long de la mesure, par exemple à une vitesse de 450 rpm avec un agitateur à hélice de 30 mm de diamètre.

Au début de la mesure, 5 cm³ de la suspension de 500 g sont injectés dans l'échantillon de 700 g d'eau désionisée et la valeur de conductivité est enregistrée au cours du temps jusqu'à ce que celle-ci reste stable ayant ainsi atteint une valeur maximale. Le temps pour atteindre cette conductivité maximale depuis le début de la mesure est noté t₁₀₀. On définit de façon analogue t₉₀, comme le temps pour atteindre 90% de la conductivité maximale C'est cette valeur t₉₀ obtenue qui est considérée comme représentant la réactivité du lait de chaux. Plus de détails sur la procédure de mesure de cette réactivité des laits de chaux sont disponibles au § 6.11. « Détermination de l'index de solubilité par conductivité » de la norme EN 12485 : 2010.

On considère donc selon la présente invention que la réactivité des laits de chaux sera élevée si la grandeur t₉₀ est inférieure ou égale à 10 sec.

Le document « Studies on the particle properties of suspended hydrated limes', U. Wittneben, Zement-Kalk-Gips, Edition B, Vol. 33(10), p. 526-534, 1980 » de Wittneben et coll. de l'association pour la recherche de l'industrie de la chaux allemand (Forschungsgemeinschaft des Verbands der Deutschen Kalkindustrie) décrit en outre que les différences dans la forme des particules, dans la taille des particules et dans la distribution des tailles de particules jouent un rôle significatif sur la viscosité du lait de chaux. Ceci est en outre confirmé par les travaux récents de Rodriguez-Navarro et coll. ("Microstructure and rheology of lime putty'", E. Ruiz-Agudo and C. Rodriguez-Navarro, Langmuir: the ACS Journal of surfaces and colloids, Vol. 26(6), p. 3868-3877, 2010). Dans ce document, on peut voir, à la figure 4a qui est à lire avec la figure 4b, un profil de tailles de particules obtenu par analyse digitale de l'image TEM, ne révélant donc forcément que les particules de tailles comprises entre 0,01 et 1 µm, le restant des particules étant illustré à la figure 4b et montre un profil multimodal. Ces auteurs ont étudié les suspensions produites à partir de chaux de différentes origines et ont conclu qu'il existe un lien entre la réactivité de la chaux vive et la taille, la stabilité et également l'interaction des particules de la chaux éteinte en suspension.

Les auteurs ont pu également corréler l'influence de la forme, de la stabilité et des interactions des particules sur la viscosité de la suspension, mais également sur le comportement d'agglomération et de floculation des particules de chaux éteinte de la suspension ou du lait de chaux.

Puisque l'agglomération et la formation de flocs des particules de chaux éteinte modifient la taille des particules apparente et la distribution de la taille des particules de chaux éteinte, il est logique que l'agglomération et la formation de flocs des particules de chaux éteinte modifie également la surface externe des particules, liée elle-même à la réactivité du lait de chaux.

En conclusion, des chaux de différentes réactivités et de diverses origines produiraient communément, même dans des conditions d'extinction identiques, des laits de chaux présentant des propriétés rhéologiques et des propriétés de réaction différentes. De plus, puisque la réactivité de la chaux vive est généralement dépendante du type de four utilisé pour calciner le calcaire en chaux vive, le type de four jouerait également un rôle dans les propriétés du lait de chaux, outre l'influence de l'origine du calcaire.

Ainsi la substitution d'une chaux vive d'un site de production particulier présentant des caractéristiques qui résultent d'une combinaison de l'origine du calcaire, du type de four utilisé et de la réactivité de la chaux vive par une chaux vive d'un autre site de production particulier présentant des caractéristiques qui résultent d'une autre combinaison d'une autre origine de calcaire, d'un autre type de four utilisé et d'une autre réactivité de chaux vive pourrait engendrer des modifications significatives dans les propriétés du lait de chaux qui en résulterait. Ce qui aurait forcément des conséquences sur l'application industrielle en aval de ce lait de chaux.

En d'autres termes, l'utilisation de laits de chaux pour une application particulière ne signifie pas seulement de choisir un compromis réalisable entre une viscosité acceptable et la réactivité du lait de chaux requise, mais signifie également que les conditions appliquées pour produire une telle suspension de chaux ne pourraient s'appliquer qu'à un nombre restreint ou éventuellement à une seule source de chaux disponible dans le commerce. Dans des cas extrêmes, cela signifierait donc qu'une seule source serait techniquement possible et économiquement viable pour produire un lait de chaux présentant des propriétés de viscosité particulières et une vitesse de réaction prédéterminée.

Il existe donc un réel besoin de développer des laits de chaux dont les propriétés seraient optimales et constantes, quelles que soient les sources de calcaire et mode de cuisson utilisés.

A ce sujet, des laits de chaux ont été divulgués dans la littérature et présentent des propriétés optimisées pour des applications particulières.

Les documents WO 96/23728, DE 2714858, DE 4447321 A1, JP 2007/031212 A, CN 201316654 Y, SU 1186248 A, EP 1039964 B1 and SE 870408 divulguent des procédés de traitement de laits de chaux dans lesquels les propriétés de ces suspensions sont optimisées pour diverses applications par désaglomération et même broyage du lait de chaux, ce qui permet d'obtenir des tailles de particules réduites par différents types d'équipement parfois très couteux.

Même si ces documents enseignent des manières d'augmenter effectivement la réactivité des laits de chaux, il n'en résulte pas moins un impact négatif sur la viscosité des laits de chaux ainsi obtenus. Dans de nombreux cas d'ailleurs, les auteurs pallient cette augmentation de la viscosité par une dilution pour diminuer la teneur en matière solide, ce qui n'est en aucun cas souhaitable pour de nombreuses applications en ce que des quantités croissantes d'eau sont donc forcément introduites, ce qui conduit à des taux de dilution trop élevés pour de nombreuses applications.

De plus, ces documents de l'état de la technique ne prennent pas en considération l'influence de l'origine du calcaire, du type de four utilisé et de la réactivité de la chaux hydratée obtenue et ne mentionnent donc aucune solution pour compenser les variations liées à ces influences.

Par exemple selon le document DE 27148858, lors de l'exploitation industrielle, il a été mis en évidence que le procédé proposé et son équipement fonctionnaient de manière fiable et avaient pour résultat une qualité de lait de chaux appropriée uniquement si de la chaux vive pulvérulente, de très haute qualité, de très haute pureté et présentant une réactivité homogène était utilisée, compliquant considérablement l'exploitation du procédé divulgué.

D'autres chaux de très haute pureté et de très bonne qualité sont décrites et utilisées pour produire des laits de chaux à haute réactivité à fines particules. Selon le document CN 201316654 ou le document EP 1039965, l'extinction de la chaux vive de haute pureté est réalisée dans un broyeur à billes. Malheureusement, ces technologies demandent l'utilisation d'une source de chaux vive très pure, nuisant ainsi à l'obtention d'un produit largement applicable industriellement en raison de coûts élevés et d'une disponibilité limitée.

Selon les documents SU 1186248, JP 2007/031212 ou SE 870408, une chaux vive de haute pureté est utilisée pour produire une suspension de particules de chaux éteinte de grande finesse. Dans le procédé décrit, une étape de criblage par la taille est introduite pour éliminer la matière inerte de la suspension de particules de chaux éteinte obtenue. Malheureusement, ces techniques sont fortement dépendantes de la réactivité de la chaux vive et présentent l'inconvénient majeur de devoir cribler ou tamiser une suspension de particules de chaux vive de viscosité très élevée composée de fines particules.

Le document JP 2007/031212 divulgue une autre technique connue pour compenser l'effet négatif de l'augmentation de la viscosité, à savoir l'utilisation d'additifs dispersants, qui agissent sur la répulsion entre les particules de chaux éteintes et diminuent de cette façon la viscosité de la suspension résultante, (voir aussi US2004/0258612)

Malheureusement, ces additifs sont dans de nombreux cas non souhaitables pour l'utilisateur final puisqu'ils résultent en l'addition d'une « impureté » dans le lait de chaux et donc dans le procédé de l'utilisateur final ou dans le produit fini, sans compter qu'il faut parfois compter avec une interférence active entre le dispersant et le procédé ou l'application final, principalement à cause du caractère de surface active de la majorité de ces additifs.

Il est aussi connu de diminuer la surface spécifique des particules pour réduire la viscosité (voir WO2005/014483).

L'invention a pour but de pallier les inconvénients de l'état de la technique en procurant un procédé de production d'un lait de chaux de grande finesse à réactivité élevée et à viscosité réduite qui peut utiliser n'importe quelle source de chaux vive, sans recourir à des additifs particuliers comme des dispersants.

Pour résoudre ce problème, il est prévu suivant l'invention, un procédé de production d'une composition de lait de chaux à réactivité présentant une grandeur t₉₀ inférieure à 10s et comprenant des particules de chaux éteinte en suspension dans une phase aqueuse, cette composition étant caractérisée en ce que lesdites particules de chaux éteinte sont constituées de particules de chaux éteinte présentant une taille de particules décrite par un profil de distribution de taille étroit et monomodal, dans lequel la différence entre d₉₀ et d₁₀ est inférieure ou égale à 15 µm. Par les termes « profil de distribution étroit » ou « profil de distribution de tailles de particules étroit », on entend au sens de la présente invention que la différence entre d₉₀ et d₁₀ est inférieure ou égale à 15 µm, de préférence inférieure ou égale à 10 µm. La notation dₓ avec 0 < x ≤ 100 représente un diamètre, exprimé en µm, par rapport auquel x % des particules sont plus petites.

Le procédé selon la présente invention fournit donc un lait de chaux très fin, dont le profil de distribution des tailles de particules est étroit et monomodal (où la largeur du profil de distribution à d₉₀ - d₁₀ ≤ 15 µm), c'est à dire qui présente un seul pic étroit correspondant à une seule famille de tailles de particules de chaux éteinte. Les particules de chaux éteinte présentent donc une réactivité élevée (taux de dissolution) de par leur finesse et présente un comportement réactionnel homogène de par l'homogénéité de taille des particules obtenues.

En effet, les lait de chaux conventionnels présentent typiquement un profil de distribution de tailles de particules qui est multimodal (présentant plusieurs pics) et comprennent donc plusieurs populations de particules de chaux éteintes. Ces différentes populations de particules seront typiquement composées de fractions fines présentant une réactivité accrue et des fractions plus grossières à réactivité réduite. De plus d'autres fractions intermédiaires peuvent être présentes, selon les modes du profil de distribution des tailles de particules observés. Ces fractions intermédiaires réagissent selon différentes vitesses de réaction. Cette répartition du comportement réactif dû aux diverses vitesse de réaction résulte en un comportement réactionnel (réactivité) du lait de chaux non homogène, ce qui est problématique pour de nombreuses applications, comme mentionné ci-dessus. Des applications dépendantes de la vitesse de dissolution du lait de chaux sont par exemple, sans toutefois y être limité, les procédés de neutralisation rapide, spécialement lors de la production de carbonate de calcium précipités PCC, les procédés de synthèse de produits chimiques comme l'oxyde d'éthylène ou de propylène ou encore les procédés de traitement des gaz de fumées.

Le lait de chaux à réactivité élevée à profil de distribution de tailles de particules étroit et monomodal obtenu par le procédé selon la présente invention ne présente pas de répartition de la vitesse de réaction. Au contraire, la composition de lait de chaux selon la présente invention réagit de manière homogène à cause de la distribution homogène des particules de chaux éteintes dans le milieu réactionnel, ce qui est dû au profil de distribution de tailles de particules étroit et monomodal et donc à l'homogénéité de la taille des particules.

Par exemple, on sait que dans la production de PCC, des particules de Ca(OH)₂ présentant un profil de distribution de tailles de particules plus large conduit à un profil de distribution des tailles des particules du PCC également plus large, ce qui n'est en aucun cas souhaitable dès lors que l'un des avantages des PCC par rapport au carbonate de calcium broyé réside justement dans une distribution des tailles de particules étroite.

Un lait de chaux obtenu par le procédé selon l'invention présentant un profil de distribution de tailles des particules étroit et monomodal permet justement d'atteindre ce profil de distribution des tailles de particules étroit dans la production de PCC et en augmente dès lors la qualité.

Un autre exemple réside dans l'utilisation de laits de chaux dans la production d'oxyde de propylène qui illustre parfaitement l'importance de lait de chaux à réactivité homogène et élevée comme réactif dans les réactions chimiques. L'oxyde de propylène est synthétisé de manière industrielle principalement pour la production de résines époxy. Lors des étapes de synthèse, de la dichlorhydrine (ClH₂C-CHOH-CH₂Cl) réagit avec un hydroxyde (de l'hydroxyde de sodium ou de préférence de l'hydroxyde de calcium) en épichlorhydrine (H₃C₂O-CH₂Cl), pour générer le groupe époxy souhaité (C₂O).

Cette réaction doit être rapide puisque l'épichlorhydrine a tendance à réagir avec l'eau du milieu réactionnel pour former de la monochlorhydrine (CH₂OH-CHOH-CH₂Cl) et ensuite du glycérol (CH₂OH-CHOH-CH₂OH), lequel détruit les groupes époxy. Il est dès lors essentiel dans ce type d'application de pouvoir disposer de lait de chaux à haute réactivité pour atteindre des rendements élevés de réaction, et de pouvoir soutirer l'épichlorhydrine formée du milieu réactionnel aussi vite que possible. Ceci peut être uniquement réalisé dans une étape ultérieure de procédé, signifiant que le soutirage d'épichlorhydrine ne peut être réalisé que lorsque la réaction de formation de l'épichlorhydrine est terminée, pour éviter la présence de dichlorhydrine qui n'a pas réagit. En effet, la présence de dichlorhydrine n'ayant pas réagit nuirait au rendement global de la réaction de formation de l'épichlorhydrine et resterait sous la forme d'impuretés dans le procédé.

Le lait de chaux obtenu par le procédé selon la présente invention est dès lors un candidat idéal pour le procédé de production de l'épichlorhydrine, en ce qu'il présente une vitesse de réaction très élevée par sa grande finesse et homogène par son profil de distribution des tailles de particules étroit et monomodal.

Avantageusement, lesdites particules présentent une taille de particules d₉₈ < 10 µm et/ou une taille de particules d₅₀ < 1,5 µm et/ou une taille de particules d₃₀ ≤ 1 µm telles que mesurée par sédimentation (par exemple avec un équipement Micromeritics Sedigraph).

Alternativement, lesdites particules présentent une taille de particules d₉₈ inférieure ou égale à 10 µm et/ou une taille de particules d₅₀ inférieure ou égale à 3 µm, de préférence inférieure ou égale à 2,5 µm, en particulier inférieure ou égale à 2 µm et/ou une taille de particules d₁₀ inférieure ou égale à 1 µm, de préférence d₂₅ inférieure ou égale à 1,5 µm, en particulier inférieure ou égale à 1 µm, telles que mesurée par diffraction laser.

Comme on peut le voir des valeurs de tailles de particules données ci-avant, les particules sont très fines, en plus de présenter un profil de distribution des tailles de particules étroit et monomodal, au contraire de l'enseignement du document EP0943590.

Avantageusement, la grandeur d₁₀ des particules est supérieure ou égale à 0,1 µm, telle que mesurée par diffraction laser, et ce, au contraire des lait de chaux conventionnels ne présentant pas cette finesse. Dans une forme de réalisation particulière, la composition de chaux éteinte selon la présente invention présente une viscosité inférieure à 350 mPa.s, de préférence inférieure à 250 mPa.s, et de manière plus préférentielle inférieure à 200 mPa.s, de façon avantageuse inférieure à 100 mPa.s telle que mesurée par rhéomètre Brookfield standard DV-III, équipé d'une aiguille 63 ou 3, à une vitesse de rotation de 100 tours par minutes.

De préférence, la composition est une suspension de chaux éteinte sous forme de lait de chaux présentant une teneur en matière solide supérieure ou égale à 2 %, avantageusement supérieure ou égale à 5 %, de manière préférentielle supérieure ou égale à 10 %, en particulier supérieure ou égale à 12 %, de façon particulièrement préférentielle supérieure ou égale à 15 %, par rapport au poids total de la suspension. En général, la composition selon l'invention est une suspension de chaux éteinte présentant une teneur en matière solide inférieure ou égale à 30 %, en particulier inférieure ou égale à 25 %.

Dans une forme de réalisation particulièrement avantageuse selon l'invention, les particules de chaux éteinte présentent une vitesse de dissolution dans l'eau distillée, telle que mesurée par la procédure KIWA telle que 90 % des particules de chaux éteinte sont dissoutes en moins de 10 secondes, en particulier en moins de 8 secondes, de préférence en moins de 5 secondes et de manière plus préférentielle en moins de 3 secondes.

D'autres formes de réalisation du procédé suivant l'invention sont indiquées dans les revendications annexées.

L'invention a pour objet un procédé de production de lait de chaux à réactivité élevée, telle qu'indiquée précédemment, comprenant les étapes consécutives de :
a) extinction d'une chaux vive en appliquant une proportion massique de chaux vive par rapport à l'eau supérieure à 1 pour 8, en particulier 1 pour 6, et inférieure à 1 pour 3 pour former une suspension de chaux,
b) coupure granulométrique de ladite suspension de chaux, éventuellement diluée par tamisage par la taille sur tamis vibrant de mailles de 250 µm, de préférence de mailles inférieures ou égales à 100 µm, avec obtention d'au moins une première fraction à broyer passant au travers des mailles du tamis de 250 µm, et d'une deuxième fraction de refus composée essentiellement de particules inertes ou d'impuretés à écarter
c) une réduction granulométrique par broyage à billes de ladite au moins une première fraction à broyer et
d) obtention dudit lait de chaux à réactivité élevée, éventuellement après dilution.

Le procédé selon la présente invention présente le grand avantage de pouvoir utiliser n'importe quel type de chaux industrielle avec une chimie et une réactivité tout à fait standard, sans devoir avoir recours à des chaux de haute pureté à la base, pour produire une suspension de chaux qui est aisément coupée granulométriquement. L'étape de coupure granulométrique ou criblage élimine la matière inerte ainsi que les particules de taille trop importante de n'importe quel type, comme le carbonate de calcium sous forme d'incuit ou toute autre impureté comme par exemple la silice. Le broyage par des billes en voie humide de ladite au moins une première fraction à broyer, issue de l'étape de coupure granulométrique, conduit à un produit sous forme de suspension de chaux éteinte dont les particules constitutives sont très fines et présentent le profil de distribution de tailles des particules étroit et monomodal d'une manière très fiable et qui peut être contrôlée.

De plus, l'optimisation du procédé selon l'invention permet de réduire l'accroissement de viscosité provenant de l'augmentation de la finesse des particules pour améliorer la réactivité du lait de chaux selon l'invention.

Le procédé selon la présente invention permet donc de produire un lait de chaux supérieur aux laits de chaux conventionnels en termes de vitesse de réaction et de comportement réactionnel pour une large gamme d'applications, comme mentionné ci-dessus dès lors qu'il présente un profil de distribution de tailles des particules étroit et monomodal.

Le terme « monomodal » dans ce contexte signifie que la distribution différentielle mesurée de la taille des particules obtenue par des méthodes de mesure conventionnelles décrites ci-dessus montre uniquement un seul mode ou pic, de préférence réparti uniformément autour de la valeur d₅₀.

La chaux éteinte conventionnelle est une matière nanocristalline qui comprend des agrégats et des agglomérats de nanocristaux d'hydroxyde de calcium de 20 à 120 nm et présente donc typiquement un profil de distribution des tailles de particules large et multimodal. La réduction de la taille des particules de cette chaux éteinte conventionnelle requiert bien plus qu'un simple broyage ou qu'une simple réduction granulométrique conventionnelle pour obtenir un distribution monomodale et étroite.

En effet, la libération de nanocristaux individuels ou d'agrégats submicroniques pendant l'extinction, la coupure granulométrique et la réduction granulométrique doit être maintenu aussi bas que possible puisqu'en tant que telles, ces fines particules nanométriques ont tendance à augmenter significativement la viscosité

De plus, certaines de ces nanoparticules sont cristallographiquement instables et recristallisent, ce qui modifie la viscosité en l'augmentant ou en la diminuant, ce qui n'est bien entendu pas souhaitable car ces changements dans les propriétés rhéologiques de la suspension ne sont ni contrôlables, ni prévisibles.

Comme le sait l'homme de l'art, lors du broyage humide dans un broyeur à billes, les particules de la matière broyée sont cassées à cause de l'énergie transférée par les billes aux particules de chaux éteinte lors des collisions, qui dépend en outre de la masse des billes, typiquement 1,5 à 2,5 kg de billes par dm³ de broyeur, et de leur vitesse liée à l'agitation (vitesse de rotation du broyeur). Cette énergie transmise doit excéder l'énergie de rupture minimale des particules, pour induire la rupture des particules de chaux éteinte. L'agitation et l'énergie dépendent du volume du broyeur humide. Par exemple, pour un broyeur de 100 dm3, l'agitation est de l'ordre de 650 rpm et la puissance de 55 à 75 kW ; pour un broyeur de 0,5 m³, l'agitation est d'environ 350 rpm et la puissance de 160 à 200 kW. En même temps, il faut éviter d'induire une énergie excessive qui conduirait à une fragmentation excessive et à la génération également inappropriée de fragments submicroniques.

Cette énergie de rupture minimale est communément une propriété de la matière, mais dans le cas de la chaux éteinte, elle dépend également de la source de chaux, des conditions d'extinction et du fractionnement de la taille des particules. Ces critères sont donc utilisés pour optimiser le broyage, ce qui permet la production d'un lait de chaux dont le profil de distribution des tailles de particules est étroit et monomodal. Bien entendu, la connaissance du taux de particules submicronique est également un facteur critique.

Avantageusement, ladite réduction granulométrique par broyage à billes est effectué dans un broyeur à bille contenant des billes d'oxyde ou de silicate de zirconium ou de verre de broyage dont la taille est inférieure à 1,4 mm.

Dans une variante, ladite coupure granulométrique est un double tamisage par la taille sur un premier tamis vibrant de mailles de 250 µm et sur un deuxième tamis vibrant de mailles inférieures ou égales à 100 µm avec obtention d'une première fraction à broyer, d'une deuxième fraction et d'une troisième fraction, où ladite première fraction à broyer est la fraction passant au travers de la maille du tamis de 250 µm et refusée au tamis de mailles inférieures ou égales à 100 µm, ladite deuxième fraction est une fraction de refus au tamis de 250 µm, composée essentiellement de particules inertes ou d'impuretés à écarter et ladite troisième fraction est une fraction passant au travers des mailles du tamis inférieure ou égale à 100 µm. Cette troisième fraction est en général à broyer.

Une coupure granulométrique peut être réalisée par hydrocyclonage de ladite suspension de chaux, éventuellement diluée, avec obtention d'une fraction de particules dont la taille de particules est inférieure à 10 µm en tant que deuxième fraction et d'une fraction de particules dont la taille des particules est supérieure à 10 µm en tant que première fraction grossière à broyer et où ledit lait de chaux à réactivité à l'eau élevée est obtenu par mélange de ladite deuxième fraction fine et de ladite première fraction grossière broyée, éventuellement après dilution.

Dans encore une autre variante selon la présente invention, ladite coupure granulométrique comprend une première étape de tamisage par la taille sur tamis vibrant de mailles de 250 µm, de préférence de mailles inférieures ou égales à 100 µm avec obtention d'une fraction acceptée passant au travers des mailles du tamis de 250 µm, de préférence des mailles inférieures ou égales à 100 µm et d'une fraction de refus composée essentiellement de particules inertes ou d'impuretés à écarter, et une deuxième étape d'hydrocyclonage de la fraction acceptée, éventuellement diluée, avec obtention d'une fraction de particules dont la taille de particules est inférieure à 10 µm en tant que deuxième fraction et d'une fraction de particules dont la taille des particules est supérieure à 10 µm en tant que première fraction grossière à broyer et où ledit lait de chaux à réactivité à l'eau élevée est obtenu par mélange de ladite deuxième fraction fine et de ladite première fraction grossière broyée, éventuellement après dilution.

Dans une variante selon l'invention, ladite coupure granulométrique comprend une première étape de double tamisage par la taille sur tamis vibrant de mailles de 250 µm et sur tamis vibrant de mailles inférieures ou égales à 100 µm avec obtention d'une fraction acceptée passant au travers des mailles du tamis de 250 µm mais refusée au tamis vibrant de mailles inférieures ou égales à 100 µm, d'une fraction de refus au tamis vibrant de mailles de 250 µm composée essentiellement de particules inertes ou d'impuretés à écarter, et d'une fraction acceptée au tamis vibrant de mailles inférieures ou égales à 100 µm, ainsi qu'une deuxième étape d'hydrocyclonage d'au moins une des fractions acceptées, éventuellement diluée, avec obtention d'au moins une fraction de particules dont la taille de particules est inférieure à 10 µm en tant que deuxième fraction fine et d'au moins une fraction de particules dont la taille des particules est supérieure à 10 µm en tant qu'au moins une première fraction grossière à broyer et où ledit lait de chaux à réactivité à l'eau élevée est obtenu par mélange de ladite deuxième fraction fine et d'au moins une première fraction grossière broyée, éventuellement après dilution.

Comme on peut le constater, ladite étape de coupure granulométrique peut être effectuée de différentes manières en choisissant une ou plusieurs étapes de coupure granulométrique sous forme de tamis vibrant. Le tamis vibrant à mailles de 250 µm peut être couplé à un hydrocyclone ou à un ou plusieurs autres tamis à mailles inférieures comme par exemple à maille de 10 µm ou moins, éventuellement couplés également à un hydrocyclone.

Plus particulièrement, dans le procédé selon la présente invention, ladite au moins une première fraction grossière broyée et ladite deuxième fraction fine sont mélangées à une proportion comprise entre 20 et 75% pour la première fraction grossière et 25% et 80% pour la seconde, éventuellement après dilution

Avantageusement, ladite chaux vive est une chaux vive est une chaux vive présentant une réactivité t₆₀ mesurée selon le test de réactivité décrit dans la norme EN459-2 comprise 0,5 et 20 minutes, de préférence entre 1 à 10 minutes, de préférence inférieure à 5 minutes.

Dans une forme de réalisation avantageuse, l'extinction est réalisée avec une eau, par exemple une eau de procédé à une température d'environ 40°C.

Dans un mode de réalisation particulièrement avantageux du procédé selon la présente invention, ladite extinction est réalisée dans un extincteur à pâte de chaux.

Avantageusement, ladite chaux vive est une chaux vive est une chaux vive présentant une réactivité t₆₀ mesurée selon le test de réactivité décrit dans la norme EN459-2 comprise 0,5 et 20 minutes, de préférence entre 1 à 10 minutes, de préférence inférieure à 5 minutes.

Dans une forme de réalisation avantageuse, l'extinction est réalisée avec une eau, par exemple une eau de procédé à une température d'environ 40°C.

Dans un mode de réalisation particulièrement avantageux du procédé selon la présente invention, ladite extinction est réalisée dans un extincteur à pâte de chaux.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est un graphique représentant la distribution des tailles de particules étroit et monomodal identifiée par un ensemble de diamètres caractéristiques du lait de chaux suivant l'invention en fonction de l'énergie de broyage appliquée.
La figure 2 est un graphique représentant les viscosités mesurées des suspensions de lait de chaux selon l'invention de différentes finesses, produites dans diverses conditions de broyage (énergie de broyage appliquée).

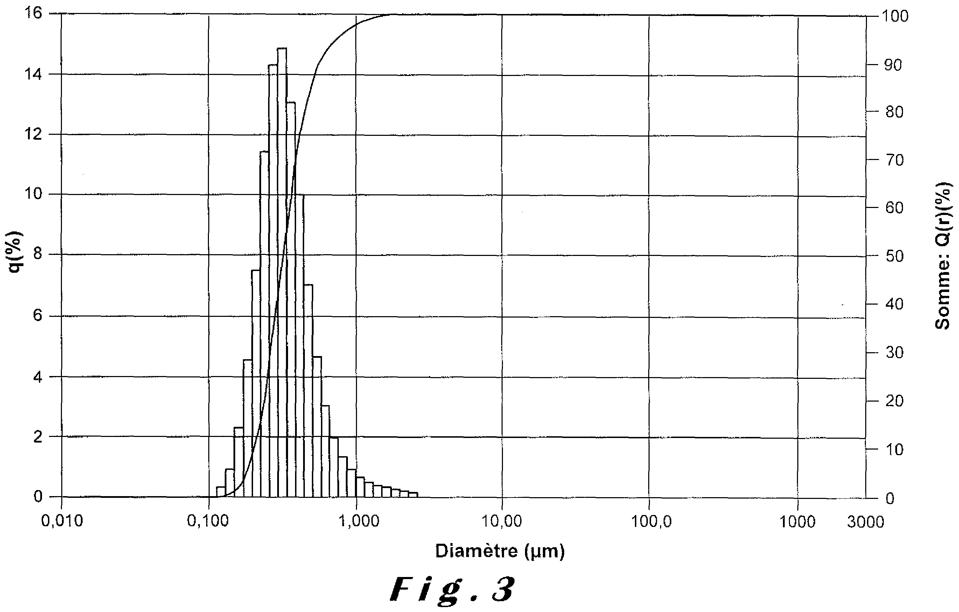

La figure 3 est un graphique représentant un exemple de distribution monomodale de particules d'un lait de chaux, mesurée par diffraction laser.

Sur les figures, les éléments identiques ou analogues portent les mêmes références.

La présente invention se rapporte donc à un procédé de production d'une suspension de chaux en trois étapes permettant de produire un lait de chaux de grande finesse et de réactivité élevée où le profil de distribution de tailles des particules est étroit et monomodal.

La première étape consiste à éteindre de la chaux vive dans un extincteur à pâte pour produire une suspension aqueuse de chaux, la deuxième étape consiste en une opération de coupure granulométrique également appelée criblage granulométrique qui permet entre autres d'éliminer les particules inertes et les impuretés comme la silice ou le calcaire de la suspension de chaux, éventuellement diluée. La troisième étape est une étape de broyage humide à billes qui permet d'obtenir le profil de distribution des tailles de particules étroit et monomodal et dont la teneur en particules inertes est réduite.

Cette distribution particulière de la taille des particules étroite et monomodale permet d'obtenir un lait de chaux de grande finesse homogène en tailles de particules et dont la réactivité est élevée et également homogène.

Dans une forme de réalisation selon la présente invention, la fraction acceptée du lait de chaux sortant du tamis vibrant de 250 µm est traitée dans une deuxième étape de coupure granulométrique comme par exemple dans un hydrocyclone ou dans un ou plusieurs tamis vibrants de maille plus petite, pour obtenir une fraction dont la taille des particules est déjà celle attendue et au moins une fraction plus grossière à broyer.

Chaque fraction plus grossière ou une ou plusieurs d'entre elles sont alors broyées selon la présente invention dans une étape de broyage humide dans un broyeur à billes pour former des particules de chaux éteinte présentant le profil de distribution des tailles de particules étroit et monomodal bien défini dans le cadre de la présente invention. La fraction acceptée fine, dont la taille des particules est déjà celle attendue et au moins une des fractions plus grossières broyées sont ensuite mélangées ou utilisées séparément.

Dans une variante selon l'invention, la chaux vive est éteinte dans un réacteur agité, dans un broyeur à billes ou dans un extincteur à hautes contraintes de cisaillement, au lieu d'un extincteur à pâte de chaux, pour autant que la chaux éteinte ne présente pas une taille de particules trop réduite, ce qui empêcherait toute coupure granulométrique ultérieure pour éliminer la fraction inerte, à cause du colmatage éventuel occasionné du tamis.

Comme on peut le constater, le choix des conditions d'extinction et de coupure granulométrique dépend largement des caractéristiques du lait de chaux résultant de la source de chaux vive. Le but de l'invention est de produire, indépendamment des caractéristiques ou des qualités de la source de chaux, une composition à base de lait de chaux dont le profil de distribution des tailles de particules est étroit et monomodal. La flexibilité procurée par le procédé selon l'invention quant à la source de chaux n'est pas le seul avantage. En effet, le procédé permet également d'utiliser différentes sources d'eau d'extinction, contrairement aux documents antérieurs, où l'eau devait être de grande pureté également. De plus, la perte au criblage est réduite, ce qui offre des avantages économiques non négligeables.

Le lait de chaux obtenu par le procédé selon la présente invention, présentant ledit profil de distribution des tailles de particules étroit et monomodal permet une utilisation dans des applications de court temps de séjour, tels que les procédés de neutralisation rapides, la synthèse de produits chimiques consommant de la chaux éteinte, l'adoucissement rapide des eaux ou la minéralisation de celles-ci ou encore la précipitation des carbonates de calcium.

La composition de lait de chaux obtenue par le procédé selon la présente invention est donc caractérisée par le fait lesdites particules présentent avantageusement une taille de particules d₉₈ < 10 µm une taille de particules d₅₀ < 1,5 µm et une taille de particules d₃₀ < 1 µm telles que mesurée par sédimentation (par exemple avec un équipement Micromeritics Sedigraph) et/ou une taille de particules d₉₈ inférieure ou égale à 10 µm, une taille de particules d₅₀ inférieure ou égale à 3 µm, de préférence inférieure ou égale à 2,5 µm, en particulier inférieure ou égale à 2 µm et une taille de particules d₁₀ inférieure ou égale à 1 µm, de préférence d₂₅ inférieure ou égale à 1,5 µm, de préférence inférieure ou égale à 1 µm, telles que mesurée par diffraction laser à l'aide d'un dispositif de type Beckmann-Coulter LS 13 320 ou Horiba LA950.

La viscosité du lait de chaux obtenu par le procédé selon la présente invention est inférieure à 350 mPa.s, de préférence inférieure à 250 mPa.s, et de manière plus préférentielle inférieure à 200 mPa.s de façon avantageuse inférieure à 100 mPa.s, telle que mesurée par rhéomètre Brookfield standard DV-III à une vitesse de rotation de 100 tours par minutes.

La teneur en matière solide du lait de chaux obtenu par le procédé selon la présente invention est en outre supérieure ou égale à 2 %, avantageusement supérieure ou égale à 5 %, de manière préférentielle supérieure ou égale à 10 %, en particulier supérieure ou égale à 12 %, de façon particulièrement préférentielle supérieure ou égale à 15 %, par rapport au poids total de la suspension. En général, la composition obtenue par le procédé selon l'invention est une suspension de chaux éteinte présentant une teneur en matière solide inférieure ou égale à 30 %, particulier inférieure ou égale à 25 %.

Enfin, la vitesse de dissolution dans l'eau distillée du lait de chaux obtenu par le procédé selon la présente invention, telle que mesurée par la procédure KIWA, est avantageusement telle que 90 % des particules de chaux éteinte sont dissoutes en moins de 8 secondes, de préférence en moins de 5 secondes et de manière plus préférentielle en moins de 3 secondes.

### EXEMPLES.-

### EXAMPLE 1.-

3 échantillons de chaux B, D, E, issus de trois sources géographiques différentes (respectivement nord de la France, Portugal et centre de la France) ayant un comportement de formation de lait de chaux similaire pendant l'extinction sont éteintes dans un hydrateur vertical de 15 dm³, équipé d'un agitateur à hélice, de 70 mm de diamètre, en ajoutant de l'eau chaude à une température de 40°C à de la chaux vive, selon une proportion chaux/eau de 1/5 en poids. Le temps de séjour est de 30 minutes avec une vitesse de rotation de 400 rpm. Les laits de chaux ainsi obtenus sont criblés sur un tamis vibrant de maille de 90 µm. Chaque fraction acceptée est diluée jusqu'à obtention d'une suspension à 15% en poids de matière solide et est broyée en voie humide dans un broyeur à billes rempli à 85% de billes de verre dont la dont la taille est de 0,8 à 1,2 mm, à une vitesse de rotation de 2200 rpm pendant une durée d'environ 2,5 min jusqu'à obtenir un d₉₈ < 10µm et un d₅₀ < 3µm mesuré par diffraction laser.

Les suspensions obtenues présentent le profil de distribution des tailles de particules étroit et monomodal et une viscosité inférieure à 350 mPa.s tel que mentionné au tableau.

### EXEMPLE COMPARATIF 1

Deux échantillons de chaux A et C, issus de deux autres sources géographiquement différentes (sud de la Pologne et sud de la France) de comportement de formation de lait de chaux légèrement différent par rapport au trois chaux de l'exemple 1 sont hydratés, criblés et broyés dans les mêmes conditions qu'à l'exemple 1. Avant broyage, la suspension A présente une viscosité significativement supérieure à celle des suspensions B, D et E. Pour la suspension C, la viscosité est largement supérieure. Après broyage, la suspension A présente une viscosité modérément supérieure et la suspension C est beaucoup trop visqueuse pour une manipulation industrielle (voir tableau). Dans les deux cas, la viscosité élevée de la suspension peut être évitée en ajustant les conditions d'extinction notamment en réduisant la température de l'eau d'extinction de l'ordre de 15°C et/ou en diminuant l'agitation d'environ 200 rpm, pour obtenir des particules dont l'énergie de rupture est supérieure ou en utilisant des conditions de broyage qui fournissent moins d'énergie par collision (voir exemple 2).

### EXEMPLE 2.-

Des échantillons de chaux A et C sont hydratés et criblés dans les mêmes conditions que selon l'exemple 1, mais broyés à 2100 rpm avec des billes plus fines de taille comprise entre 0,5 et 0,7 mm, c'est-à-dire transmettant une énergie par collision environ 60 % inférieure. Malgré que la fraction de chaux éteinte non broyée (A1 et C1) soit similaire à celle de l'exemple comparatif 1 et en dépit du fait que la chaux éteinte broyée (A1 et C1) soit plus fine que la chaux broyée de l'exemple comparatif 1 (A et C), la viscosité de la suspension C1 est significativement réduite (voir tableau) et la viscosité de la suspension A1 n'est pas très fortement augmentée, malgré l'extrême finesse du lait de chaux obtenu présentant un d₉₈ d'environ 5 µm), un d₅₀ d'environ 1.5µm et d₂₅ d'environ 1µm.

**Tableau.- résultats analytiques sur les suspensions des exemples 1 et 2 et de l'exemple comparative 1. La distribution de taille des particules a été mesurée par le dispositif Beckmann-Coulter Laser Diffraction Particle Sizer LS 13 320**

| | | | KIWA | | Distribution des tailles de particules d'un lait de chaux criblé mais non broyé | | | | |
|---|---|---|---|---|---|---|---|---|---|
| **échantillon** | % Solide | Viscosité (mPa.s) | T₁₀₀ (s) | T₉₀ (s) | d₉₈ (µm) | d₉₅ (µm) | d₉₀ (µm) | d₅₀ (µm) | d₂₅ (µm) |
| **A** | 15.1 | **140** | 65.4 | 9.4 | 61.0 | 42.2 | 28.3 | 5.7 | 2.5 |
| **B** | 15.1 | 10 | 92.5 | 20.9 | 78.2 | 58.0 | 39.0 | 7.3 | 3.1 |
| **C** | 15.2 | 350 | 55.3 | 9.6 | 61.9 | 46.6 | 30.9 | 5.4 | 2.4 |
| **D** | 15.2 | 45 | 100.5 | 17.4 | 80.1 | 57.9 | 33.4 | 5.6 | 2.7 |
| **E** | 15.1 | 21 | 64.7 | 15.5 | 73.6 | 55.6 | 35.4 | 6.4 | 3.1 |
| **A1** | 15.0 | **140** | 135.4 | 5.0 | 62.1 | 46.2 | 27.9 | 4.7 | 2.2 |
| **C1** | 14.8 | **410** | 49.5 | 4.6 | 59.2 | 42.0 | 28.4 | 4.8 | 2.0 |

| | | | KIWA | | Distribution des tailles de particules du lait de chaux broyé | | | | |
|---|---|---|---|---|---|---|---|---|---|
| **échantillon** | % Solide | Viscosité (mPa.s) | T₁₀₀ (s) | T₉₀ (s) | d₉₈ (µm) | d₉₅ (µm) | d₉₀ (µm) | d₅₀ (µm) | d₂₅ (µm) |
| **A** | 15.3 | **390** | 1.8 | 1.6 | 8.9 | 7.7 | 6.5 | 2.3 | 1.4 |
| **B** | 14.9 | 190 | 4.2 | 3.0 | 9.1 | 7.9 | 6.6 | 2.4 | 1.4 |
| **C** | 15.2 | **1760** | 4.8 | 2.8 | 8.9 | 7.7 | 6.4 | 2.2 | 1.3 |
| **D** | 14.9 | 265 | 13.7 | 0.8 | 9.2 | 8.0 | 6.7 | 2.4 | 1.4 |
| **E** | 14.8 | 125 | 5.4 | 4.0 | 8.7 | 7.6 | 6.5 | 2.5 | 1.5 |
| **A1** | 15.0 | **530** | 5.6 | 4.6 | 6.1 | 5.1 | 4.1 | 1.6 | 1.0 |
| **C1** | 14.7 | **660** | 5.0 | 4.6 | 4.9 | 4.0 | 3.0 | 1.4 | 0.9 |

### EXEMPLE 3.-

Pour illustrer l'influence des conditions d'extinction sur le broyage du lait de chaux et les propriétés du lait de chaux de grande finesse ainsi obtenu, un autre échantillon (B1) de la même source géographique que l'échantillon B est hydraté dans deux conditions différentes.

Dans le premier cas, une partie de l'échantillon est hydraté en ajoutant de l'eau chaude à 40 °C à la chaux vive avec une proportion de chaux/eau de 1/5 en poids.

Dans le second cas, une autre partie de l'échantillon est hydraté par addition d'eau tiède à une température de 20°C avec la même proportion de chaux/eau de 1/5 en poids. Les laits de chaux ainsi obtenus sont ensuite tamisés sur un tamis vibrant à mailles de 250 µm et les fractions acceptées sont ensuite diluées jusqu'à obtenir une teneur en matière solide de 13 % en poids et réparties en différents sous-échantillons. Ces sous-échantillons sont ensuite broyés dans différentes conditions dans un broyeur à billes, en particulier en faisant varier la vitesse de rotation du broyeur et le temps de séjour, mais sinon, globalement dans les mêmes conditions qu'à l'exemple 1 à savoir, la même taille de billes, la même nature de billes, le même taux de remplissage, etc.

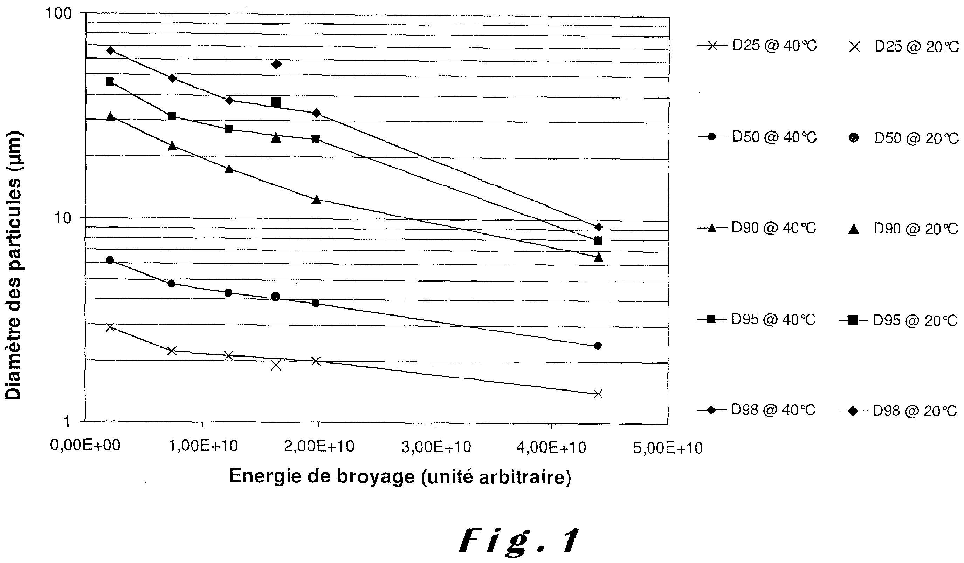

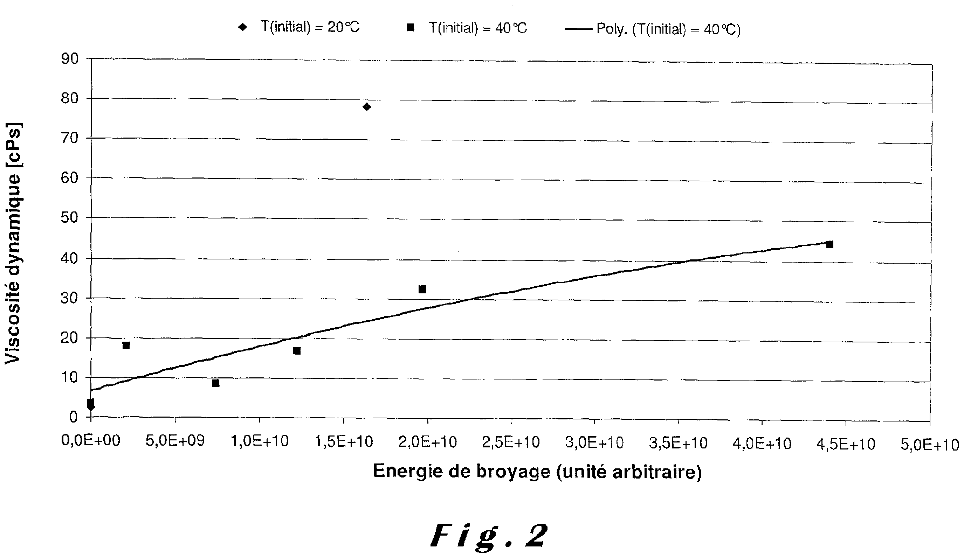

La distribution des tailles de particules obtenue est présentée à la figure 1. Les viscosités mesurées des suspensions obtenues sont illustrées à la figure 2.

De manière attendue, les diamètres caractéristiques diminuent lorsque l'énergie de broyage appliquée augmente. Cependant, l'extinction avec une eau présentant une température de 20°C conduit à une fraction de lait de chaux dont les particules sont plus grossières, c'est-à-dire présentant des tailles de particules d₉₀, d₉₅ et d₉₈ supérieures. Les fractions de lait de chaux à particules plus grossières conduisent à un lait de chaux après broyage moins fin en appliquant la même énergie de broyage en comparaison du lait de chaux hydratée par une eau présentant une température de 40°C.

Alors que la suspension éteinte par addition d'une eau présentant une température de 40°C peut être broyée dans les conditions présentées à la figure 1 pour atteindre le profil de distribution des tailles de particules selon la présente invention, ce n'était pas le cas pour le lait de chaux obtenu avec une eau présentant initialement une température de 20°C. Le lait de chaux éteint avec une eau présentant une température de 20°C reste légèrement trop grossier en termes de d₉₈.

De façon étonnante le lait de chaux obtenu avec l'eau initialement à une température de 20°C présente une viscosité plus élevée en dépit de la présence d'une fraction de particules de taille plus élevée dans ce lait de chaux par rapport à celui obtenu avec une eau d'extinction présentant initialement une température de 40°C.

Dans les deux cas, la viscosité augmente avec l'énergie de broyage appliquée, c'est-à-dire lorsque la taille des particules diminue pour les laits de chaux respectifs.

On peut donc conclure que les conditions d'extinction, de criblage ou de coupure granulométrique (fraction grossière avant broyage) et les conditions de broyage peuvent être optimisées les unes par rapport aux autres afin de produire un lait de chaux amélioré à réactivité plus élevée et viscosité réduite.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de production d'une composition de lait de chaux à réactivité élevée présentant une grandeur t₉₀ inférieure ou égale à 10 s et comprenant des particules de chaux éteinte en suspension dans une phase aqueuse, **caractérisée en ce que** lesdites particules de chaux éteinte sont constituées de particules de chaux éteinte présentant une taille de particules décrite par un profil de distribution de taille de particules étroit et monomodal, dans lequel la différence entre d₉₀ et d₁₀ est inférieure ou égale à 15 µm, comprenant les étapes consécutives de :
a) extinction d'une chaux vive en appliquant une proportion de chaux vive à eau supérieure à 1 pour 8, en particulier 1 pour 6, et inférieure à 1 pour 3 pour former une suspension de chaux,
b) coupure granulométrique de ladite suspension de chaux, éventuellement diluée, par tamisage par la taille sur tamis vibrant de mailles de 250 µm, de préférence de mailles inférieures ou égales à 100 µm, avec obtention d'au moins une première fraction à broyer passant au travers des mailles du tamis de 250 µm, de préférence de mailles inférieures ou égales à 100 µm, et d'une deuxième fraction de refus composée essentiellement de particules inertes ou d'impuretés à écarter,
c) une réduction granulométrique par broyage à billes de ladite au moins une première fraction à broyer et
d) obtention dudit lait de chaux à réactivité élevée, éventuellement après dilution.

2. Procédé selon la revendication 1, dans laquelle lesdites particules présentent une taille de particules d₉₈ inférieure ou égale à 10 µm, une taille de particules d₅₀ inférieure ou égale à 1,5 µm et une taille de particules d₃₀ inférieure ou égale à 1 µm telles que mesurée par sédimentation.

3. Procédé selon la revendication 1 ou 2, dans laquelle lesdites particules présentent une taille de particules d₉₈ inférieure ou égale à 10 µm, une taille de particules d₅₀ inférieure ou égale à 3 µm, de préférence inférieure ou égale à 2,5 µm, en particulier inférieure ou égale à 2 µm et une taille de particules d₁₀ inférieure ou égale à 1 µm, de préférence d₂₅ inférieure ou égale à 1,5, en particulier inférieure ou égale à 1 µm telles que mesurée par diffraction laser.

4. Procédé selon l'une quelconque des revendications 1 à 3, dans lequel la composition présente une viscosité inférieure à 350 mPa.s, de préférence inférieure à 250 mPa.s, et de manière plus préférentielle inférieure à 200 mPa.s telle que mesurée par rhéomètre Brookfield standard DV-III à une vitesse de rotation de 100 tours par minutes.

5. Procédé selon l'une quelconque des revendications 1 à 4, dans lequel la composition est une suspension de chaux éteinte sous forme de lait de chaux présentant une teneur en matière solide supérieure ou égale à 2 %, avantageusement supérieure ou égale à 5 %, de manière préférentielle supérieure ou égale à 10 %, en particulier supérieure ou égale à 12 %, de façon particulièrement préférentielle supérieure ou égale à 15 %, par rapport au poids total de la suspension.

6. Procédé selon l'une quelconque des revendications 1 à 4, dans lequel la composition est une suspension de chaux éteinte sous forme de lait de chaux présentant une teneur en matière solide inférieure ou égale à 30 %, particulier inférieure ou égale à 25 %.

7. Procédé selon l'une quelconque des revendications 1 à 6, dans lequel la composition présente une vitesse de dissolution dans l'eau distillée, telle que mesurée par la procédure KIWA telle que 90 % des particules de chaux éteinte sont dissoutes en moins de 8 secondes, d préférence en moins de 5 secondes et de manière plus préférentielle en moins de 3 secondes.

8. Procédé selon l'une quelconque des revendications 1 à 7, dans lequel ladite réduction granulométrique par broyage à billes est effectuée dans un broyeur à bille contenant des billes de broyage dont la taille est inférieure à 1,4 mm.

9. Procédé selon l'une quelconque des revendications 1 à 8, dans lequel ladite coupure granulométrique est un double tamisage par la taille sur un premier tamis vibrant de mailles de 250 µm et sur un deuxième tamis vibrant de mailles inférieures ou égales à 100 µm avec obtention d'une première fraction à broyer, d'une deuxième fraction et d'une troisième fraction, où ladite première fraction à broyer est la fraction passant au travers des mailles du tamis de 250 µm et refusée au tamis de mailles inférieures ou égales à 100 µm, ladite deuxième fraction est une fraction de refus au tamis de mailles de 250 µm, composée essentiellement de particules inertes ou d'impuretés à écarter et ladite troisième fraction est une fraction passant au travers des mailles du tamis inférieures ou égales à 100 µm.

10. Procédé selon l'une quelconque des revendications 1 à 9, dans lequel ladite chaux vive est une chaux vive présentant une réactivité t₆₀ mesurée selon le test de réactivité décrit dans la norme EN459-2 comprise entre 0,5 et 20 minutes, de préférence entre 1 à 10 minutes, de préférence inférieure à 5 minutes.

11. Procédé selon l'une quelconque des revendications 1 à 10, dans lequel l'extinction est réalisée avec une eau, par exemple une eau de procédé à une température d'environ 40°C.

12. Procédé selon l'une quelconque des revendications 1 à 11, dans lequel ladite extinction est réalisée dans un extincteur à pâte de chaux.

## Patentansprüche

1. Herstellungsverfahren einer Zusammensetzung von Kalkmilch mit erhöhter Reaktivität, welche eine Größte t₉₀ von weniger als oder gleich 10 s aufweist und Partikel von gelöschtem Kalk in Suspension in einer wässrigen Phase umfasst, **dadurch gekennzeichnet, dass** die erwähnten Partikel von gelöschtem Kalk aus Partikeln von gelöschtem Kalk bestehen, die eine Partikelgröße aufweisen, beschrieben durch ein enges und monomodales Größenverteilungsprofil, in dem die Differenz zwischen d₉₀ und d₁₀ weniger als oder gleich 15 µm ist welches der Reihe nach die folgenden Schritte umfasst:
a) Löschen eines Branntkalks unter Anwendung eines Verhältnisses von Branntkalk zu Wasser von mehr als 1 zu 8, insbesondere 1 zu 6, und weniger als 1 zu 3, um eine Suspension von Kalk zu bilden;
b) granulometrische Fraktionierung der erwähnten Suspension von Kalk, eventuell verdünnt, durch Sieben nach Größe auf Schüttelsieb mit Maschen von 250 µm, bevorzugt Maschen kleiner als oder gleich 100 µm, mit Erhalt von zumindest einer ersten Mahlfraktion, dem Siebdurchgang, welcher durch die Maschen des Siebes von 250 µm geht, bevorzugt Maschen kleiner als oder gleich 100 µm, und einer zweiten Fraktion, dem Siebüberlauf, bestehend im Wesentlichen aus inerten Partikeln oder Verunreinigungen, die zu verwerfen sind;
c) eine granulometrische Reduktion durch Kugelmahlung der erwähnten zumindest ersten Mahlfraktion und
d) Erhalt der erwähnten Kalkmilch mit erhöhter Reaktivität, eventuell nach Verdünnung.

2. Verfahren nach Anspruch 1, wobei die erwähnten Partikel eine Partikelgröße d₉₈ von weniger als oder gleich 10 µm aufweisen, eine Partikelgröße d₅₀ von weniger als oder gleich 1,5 µm und eine Partikelgröße d₃₀ von weniger als oder gleich 1 µm, wie gemessen durch Sedimentation.

3. Verfahren nach Anspruch 1 oder 2, wobei die erwähnten Partikel eine Partikelgröße d₉₈ von weniger als oder gleich 10 µm aufweisen, eine Partikelgröße d₅₀ von weniger als oder gleich 3 µm, bevorzugt weniger als oder gleich 2,5 µm, insbesondere weniger als oder gleich 2 µm und eine Partikelgröße d₁₀ von weniger als oder gleich 1 µm, bevorzugt d₂₅ von weniger als oder gleich 1,5, insbesondere weniger als oder gleich 1 µm, wie gemessen durch Laserbeugung.

4. Verfahren nach irgendeinem der Ansprüche 1 bis 3, welche eine Viskosität von weniger als 350 mPa.s aufweist, bevorzugt weniger als 250 mPa.s und noch besser weniger als 200 mPa.s, wie gemessen mit einem Standard-Brookfield-Rheometer DV-III bei einer Rotationsgeschwindigkeit von 100 Umdrehungen pro Minute.

5. Verfahren nach irgendeinem der Ansprüche 1 bis 4, wobei die Zusammensetzung eine Suspension von gelöschtem Kalk in Form von Kalkmilch ist, welche einen Feststoffgehalt von mehr als oder gleich 2 % aufweist, vorteilhafterweise mehr als oder gleich 5 %, vorzugsweise mehr als oder gleich 10 %, insbesondere mehr als oder gleich 12 %, besonders vorzugsweise mehr als oder gleich 15 %, im Verhältnis zum Gesamtgewicht der Suspension.

6. Verfahren nach irgendeinem der Ansprüche 1 bis 4, wobei die Zusammensetzung eine Suspension von gelöschtem Kalk in Form von Kalkmilch ist, welche einen Feststoffgehalt von weniger als oder gleich 30 % aufweist, insbesondere weniger als oder gleich 25 %.

7. Verfahren nach irgendeinem der Ansprüche 1 bis 6, welche eine solche Lösungsgeschwindigkeit in destilliertem Wasser, wie gemessen durch das KIWA-Verfahren, aufweist, dass 90 % der Partikel von gelöschtem Kalk in weniger als 8 Sekunden gelöst sind, bevorzugt in weniger als 5 Sekunden und noch besser in weniger als 3 Sekunden.

8. Verfahren nach irgendeinem der Ansprüche 1 bis 7, wobei die erwähnte granulometrische Reduktion durch Kugelmahlung in einer Kugelmühle erfolgt, welche Mahlkugeln enthält, deren Größe weniger als 1,4 mm beträgt.

9. Verfahren nach irgendeinem der Ansprüche 1 bis 8, wobei die erwähnte granulometrische Fraktionierung ein doppeltes Sieben nach der Größe auf einem ersten Schüttelsieb mit Maschen von 250 µm und auf einem zweiten Schüttelsieb mit Maschen von weniger als oder gleich 100 µm ist, mit Erhalt einer ersten Mahlfraktion, einer zweiten Fraktion und einer dritten Fraktion, wobei die erwähnte erste Mahlfraktion die Fraktion ist, die durch die Maschen des Siebes von 250 µm geht und am Sieb mit Maschen von weniger als oder gleich 100 µm überläuft, wobei die erwähnte zweite Fraktion eine Überlauffraktion am Sieb mit Maschen von 250 µm ist, zusammengesetzt im Wesentlichen aus inerten Partikeln oder Verunreinigungen, die zu verwerfen sind, und die erwähnte dritte Fraktion eine Fraktion ist, die durch die Maschen des Siebes von weniger als oder gleich 100 µm geht.

10. Verfahren nach irgendeinem der Ansprüche 1 bis 9, wobei der erwähnte Branntkalk ein Branntkalk ist, welcher eine Reaktivität t60, gemessen nach dem in der Norm EN459-2 beschriebenen Reaktivitätstest, von zwischen 0,5 und 20 Minuten aufweist, bevorzugt zwischen 1 und 10 Minuten, bevorzugt weniger als 5 Minuten.

11. Verfahren nach irgendeinem der Ansprüche 1 bis 10, wobei das Löschen mit einem Wasser durchgeführt wird, beispielsweise einem Verfahrenswasser bei einer Temperatur von ungefähr 40 °C.

12. Verfahren nach irgendeinem der Ansprüche 1 bis 11, wobei das erwähnte Löschen in einem Löscher für Kalkpaste durchgeführt wird.

## Claims

1. Method for producing a high reactivity milk of lime composition having a magnitude of t₉₀ less than or equal to 10 s and comprising slaked lime particles suspended in an aqueous phase, **characterised in that** said slaked lime particles are made of slaked lime particles that have a particle size described by a narrow and monomodal profile of particle size distribution, wherein the difference between d₉₀ and d₁₀ is less than or equal to 15 µm, comprising the consecutive steps of:
a) slaking of a quicklime by applying a proportion of quicklime to water greater than 1 to 8, in particular 1 to 6, and less than 1 to 3 in order to form a lime suspension,
b) particle size cutting of said lime suspension, possibly diluted, by screening by size on a vibrating screen with meshes of 250 µm, more preferably with meshes less than or equal to 100 µm, with the obtaining of at least a first fraction to be ground passing through the meshes of the screen of 250 µm, more preferably with meshes less than or equal to 100 µm, and of a second refused fraction substantially comprised of inert particles or of impurities to be separated,
c) a particle size reduction by grinding with balls of said at least a first fraction to be ground and
d) obtaining of said highly reactive milk of lime with high reactivity, possibly after dilution.

2. Method according to claim 1, wherein said particles have a particle size d₉₈ less than or equal to 10 µm, a particle size d₅₀ less than or equal to 1.5 µm and a particle size d₃₀ less than or equal to 1 µm such as measured by sedimentation.

3. Method according to claim 1 or 2, wherein said particles have a particle size d₉₈ less than or equal to 10 µm, a particle size d₅₀ less than or equal to 3 µm, preferably less than or equal to 2.5 µm, in particular less than or equal to 2 µm and a particle size d₁₀ less than or equal to 1 µm, more preferably d₂₅ less than or equal to 1.5, in particular less than or equal to 1 µm such as measured by laser diffraction.

4. Method according to any of claims 1 to 3, having a viscosity less than 350 mPa.s, preferably less than 250 mPa.s, and most preferably less than 200 mPa.s such as measured by Brookfield standard DV-III rheometer at a rotation speed of 100 rotations per minute.

5. Method according to any of claims 1 to 4, wherein the composition is a slaked lime suspension in the form of milk of lime having a solid content greater than or equal to 2%, advantageously greater than or equal to 5%, preferably greater than or equal to 10%, in particular greater than or equal to 12%, particularly preferably greater than or equal to 15%, with respect to the total weight of the suspension.

6. Method according to any of claims 1 to 4, wherein the composition is a slaked lime suspension in the form of milk of lime having a solid content less than or equal to 30%, in particular less than or equal to 25%.

7. Method according to any of claims 1 to 6, having a dissolution speed in distilled water as measured by the KIWA procedure such that 90% of the slaked lime particles are dissolved in less than 8 seconds, preferably in less than 5 seconds and most preferably in less than 3 seconds.

8. Method according to any of claims 1 to 7, wherein said particle size reduction by grinding with balls is carried out in a ball mill containing grinding balls of which the size is less than 1.4 mm.

9. Method according to any of claims 1 to 8, wherein said particle size cut is a double screening by the size on a first vibrating screen with meshes of 250 µm and on a second vibrating screen with meshes less than or equal to 100 µm with the obtaining of a first fraction to be ground, of a second fraction and of a third fraction, wherein said first fraction to be ground is the fraction passing through the meshes of the screen of 250 µm and refused at the screen with meshes less than or equal to 100 µm, said second fraction is a fraction refused at the screen with meshes of 250 µm, substantially comprised of inert particles or of impurities to be separated and said third fraction is a fraction passing through the meshes of the screen less than or equal to 100 µm.

10. Method according to any of claims 1 to 9, wherein said quicklime is a quicklime having a reactivity t₆₀ measured according to the reactivity test described in the standard EN459-2 between 0.5 and 20 minutes, more preferably between 1 to 10 minutes, preferably less than 5 minutes.

11. Method according to any of claims 1 to 10, wherein the slaking is carried out with a water, for example a process water at a temperature of approximately 40°C.

12. Method according to any of claims 1 to 11, wherein said slaking is carried out in a lime paste slaker.
